# EUROPÄISCHE PATENTSCHRIFT

(11) **EP 2 397 727 B1**
(45) Veröffentlichungstag und Bekanntmachung des Hinweises auf die Patenterteilung: **28.11.2012**
(21) Anmeldenummer: 11161448.3
(22) Anmeldetag: 07.04.2011
(51) Int. Cl.: F16J 15/32, F16K 1/44, F16J 15/06

(54) **Mehrteiliger Ventilteller**
Multi-part valve disc
Tête de soupape en plusieurs parties

(30) Priorität: 21.06.2010 DE 102010030298
(43) Veröffentlichungstag der Anmeldung: 21.12.2011
(73) Patentinhaber: Krones AG, 93073 Neutraubling (DE)
(72) Erfinder: Weimer, Dieter, 63112, Dietzenbach (DE); Sauer, Martin, 86687, Altisheim (DE)
(74) Vertreter: Grünecker, Kinkeldey, Stockmair & Schwanhäusser

(56) Entgegenhaltungen:
- WO-A1-2005/098287
- DE-C1- 10 147 455
- DE-U1- 20 205 467
- DE-U1- 29 818 551
- DE-U1-202006 004 173

## Beschreibung

Die Erfindung betrifft einen mehrteiligen Ventilteller gemäß Oberbegriff des Patentanspruchs 1 sowie eine Ringdichtung für einen mehrteiligen Ventilteller gemäß Oberbegriff des Patentanspruchs 14.

In dem aus DE 101 47 455 C bekannten, mehrteiligen Ventilteller eines Doppelsitzventils, das zwei jeweils mit Schieberventilfunktion mit der Innenwand eines Sitzes zusammenwirkende Ventilteller aufweist, besteht die Ringdichtung aus drei vorgefertigten, ineinander montierten Komponenten, nämlich dem Dichtring aus elastomerem Material, dem formstabilen Stützring, und dem beispielsweise in Form eines O-Ring dazwischen eingesetzten Rückstellbereich für den Dichtring. Da der Stützring nur radial an einem Teil des Ventiltellers abgestützt ist, wird die den Vorspannkraftschluss für den Dichtring generierende Klemmweite der die Ringdichtung aufnehmenden Ringnut nur durch den metallischen Anschlag zwischen den gegeneinander verschraubten Teilen des Ventiltellers definiert. Der Stützring sitzt axial schwimmend zwischen den Außenschenkeln des Dichtringes. Bei diesem Konzept ist es schwierig, aufgrund der Herstellungstoleranzen der Ventiltellerteile eine definierte Klemmweite für die Ringnut exakt reproduzierbar einzustellen, die für einen exakt definierten Vorspannkraftschluss des Dichtringes bei montierter Ringdichtung und für dessen ordnungsgemäße Funktion beim Arbeiten des Doppelsitzventils entscheidend ist. Im Betrieb des Doppelsitzventils, d.h. beim Verschieben des Ventiltellers entlang der Innenwand des Sitzes unter dynamischer Verformung der Außendichtzone, beim Austauchen des Dichtringes aus dem Sitz, und beim Wiedereintauchen des Dichtringes in den Sitz jeweils unter Walkverformung der Außendichtzone treten unvermeidbare Relativbewegungen zwischen den drei Komponenten auf, die zu lokalen Reibungskonzentrationen, Spannungsspitzen und Walkbewegungen im Dichtring führen, was die Lebensdauer des Dichtrings beschränkt. Diese mechanischen Einflüsse werden noch durch mögliche Schwimmbewegungen des Stützringes in axialer Richtung zwischen den eingespannten Außenschenkeln des Dichtringes verstärkt.

Bei einem aus EP 1 730 430 A bekannten Doppelsitzventil erbringt der eine Ventilteller eine Sitzventilfunktion auf einer konischen Sitzfläche des Sitzes, während der andere, mehrteilige Ventilteller im Sitz eine Schieberventilfunktion mit nur radialer Abdichtung erbringt. Die Ringdichtung im mehrteiligen Ventilteller besteht aus einem elastischen Dichtring mit annähernd C-förmigem Querschnitt und einem Stützring mit annähernd T-förmigem Querschnitt, wobei der Dichtring auf den Stützring aufvulkanisiert ist, derart, dass eine radiale Außendichtzone angrenzend an den T-Quersteg des Stützringes und zusätzlich eine axiale Mitteldichtzone in der Oberseite eines Teils des Ventiltellers freiliegen. Die als Verbundkonstruktion ausgebildete Ringdichtung ist aufwändig herzustellen und teuer. Da der Dichtring an zwei aneinander angrenzenden Dichtzonen freiliegt, bedarf er der Verbindung mit dem Stützring durch die Vulkanisation, weil sonst ein Außenschenkel des Dichtringes unzulässige Relativbewegungen ausführen könnte, bei denen Reinigungsmedium oder ein Arbeitsmedium die Ringdichtung hinterwandern würde. Jedoch definiert der Stützring die Klemmweite der Ringnut, da die Teile des Ventiltellers formschlüssig am Stützring abgestützt sind und diesen axial positionieren.

Weiterer Stand der Technik ist zu finden in DE 298 18 551 U1, DE 20 2006 004 173 U1 und DE 202 05 467 U1.

Der Erfindung liegt die Aufgabe zugrunde, einen mehrteiligen Ventilteller der eingangs genannten Art sowie eine Ringdichtung im Hinblick auf kostengünstige und einfache Herstellung, hohe Funktionssicherheit und minimale Komponentenanzahl zu verbessern.

Die gestellte Aufgabe wird mit den Merkmalen des Patentanspruchs 1 sowie den Merkmalen des Patentanspruchs 16 gelöst.

Da die Ringdichtung im mehrteiligen Ventilteller aus nur zwei Komponenten besteht und somit beim Arbeiten des Schieber- und/oder Sitzventils, falls überhaupt, Relativbewegungen nur zwischen zwei Komponenten auftreten, ergeben sich eine kostengünstigere Herstellung, eine einfache Montage, bequeme Demontage beim Auswechseln des einen Verschleißteil darstellenden Dichtringes, und höhere Funktionssicherheit.

Die Ringdichtung ist eine funktionelle und universelle Ausstattungskomponente solcher Ventilteller, da der Stützring für eine definierte Positionierung des Dichtrings sorgt, und einen exakt vorbestimmten Vorspannkraftschluss unterstützt.

Bevorzugt sind Teile des Ventiltellers form- und kraftschlüssig in von der Hubrichtung des Ventiltellers definierten Axialrichtungen von zwei Seiten am Stützring abgestützt, so dass der Stützring stabil positioniert ist und keine Relativbewegungen relativ zum Dichtring auszuführen vermag. Über die Abstützung der Teile am Stützring wird somit die einen Vorspannkraftschluss für den Dichtring generierende Klemmweite der Ringnut zwischen den Teilen des Ventiltellers definiert. Es lässt sich auf diese Weise innerhalb einer Bauserie von Ventiltellern und Ringdichtungen eine weitestgehend gleichbleibende Vorspannung des Dichtringes in der Ringnut sicherstellen, wobei Herstellungstoleranzen beispielsweise der Gewindeverbindung zwischen den Teilen und/oder das Anzugsmoment einer Gewindeverbindung keinen Einfluss auf die Vorspannung des Dichtringes gewinnen.

Bevorzugt definiert ferner der Stützring über eine radiale Abstützung an einem Teil des Ventiltellers die einen Überstand der Außendichtzone des Dichtringes über den Ventilteller generierende Radialposition für den Dichtring, so dass der Stützring damit eine weitere Positionierungsfunktion in der Ringdichtung bzw. dem Ventilteller zu erfüllen vermag.

Entsprechend einem besonders wichtigen, eigenständigen Gedanken der Erfindung werden unterschiedliche Stützringe verwendet, die sich dadurch unterscheiden, dass die Vertiefung entweder radial nach außen weist oder axial orientiert ist oder sogar mit axialen und radialen Richtungskomponenten schräg nach außen orientiert ist. Diese Stützringe gestatten es, Ringdichtungen zu erstellen, die wahlweise für Ventilteller unterschiedlicher Ventilfunktionen nutzbar sind, z.B. für einen Ventilteller mit nur radialer Abdichtung und einer Ventilschieberfunktion, einem Ventilteller mit radialer und axialer Abdichtung mit einer Sitzventilfunktion, oder einem Ventilteller mit nur axialer Abdichtung und ebenfalls einer Sitzventilfunktion. Die in den unterschiedlichen Stützringen vorliegende Orientierung der Vertiefung bestimmt somit den Einsatz des jeweiligen Stützringes für die Ringdichtung des jeweiligen Ventiltellertyps. Dieser Gedanke wird besonders zweckmäßig damit erweitert, dass unabhängig von der Ausbildung des Stützringes jeweils der gleiche Dichtringtyp eingesetzt wird, der in unterschiedlichen Drehlagen auf den beiden Stützringen aufgebracht ist, jedoch in ein- und derselben Herstellungsform produziert werden kann. Diese Gleichteile-Philosophie hat weiteren günstigen Einfluss auf die Gestehungskosten zumindest der Dichtringe (große Stückzahl) und damit auch unterschiedlicher Ventilteller. Ein weiterer Vorteil dieses Konzeptes ist darin zu sehen, dass die Gefahr von Verwechslungen bei der Herstellung bzw. Montage der Ventilteller und beim Dichtringaustausch minimiert ist, da ohnedies nur der jeweils richtige Stützring eingebaut werden kann, und die mit dem jeweiligen Stützring kombinierbaren untereinander form- und dimensionsgleichen Dichtringe in jedem Fall passen.

Bevorzugt kann sogar auf jeden der unterschiedlichen Stützringe derselbe Dichtringtyp aufgebracht sein, d.h., ein jeder von in derselben Produktionsform mit einer einzigen Spezifikation hergestellten Dichtringen.

Da, abhängig von der Ausbildung, d.h. Form und/oder Größe, des jeweiligen Stützringes der aufgebrachte Dichtring gegebenenfalls mehr oder weniger gedehnt und/oder verdreht wird, kann erfindungsgemäß zwar der gleiche Dichtringtyp verwendet werden, der sich in derselben Produktionsform herstellen lässt, jedoch gegebenenfalls mit unterschiedlichen Shore-Härten oder Elastizitäten oder aus unterschiedlichen Materialien. Solche inneren Unterschiede zwischen den außen gleichen Dichtringen können problemlos bei der Herstellung der Dichtringe beispielsweise im Spritzguss einfach realisiert werden.

Bei einer zweckmäßigen Ausführungsform weist der Dichtring in seinem Querschnitt zwei Außenschenkel auf, die, vorzugsweise, in Richtung zu ihren freien Enden in der Stärke zunehmen, beispielsweise annähernd keilförmig gestaltet sind. Zwischen den Außenschenkeln wird außenseitig die, vorzugsweise dachförmig gestaltete, Außendichtzone vorgesehen. Innenseitig wird angrenzend an jeden Außenschenkel eine Ringnut eingeformt. Zwischen den Ringnuten weist schließlich der Dichtring wenigstens einen einwärts vortretenden Ringwulst auf. Der Ringwulst kann mit zumindest teilweise rundem Querschnitt gestaltet werden. Diese einfache Querschnittsform des Dichtringes erfüllt die unterschiedlichen Anforderungen hinsichtlich des Dicht- und Arbeitsverhaltens beim Arbeiten eines Schieber- oder Sitzventils und ist kostengünstig produzierbar. Das Material des Dichtringes kann ein Elastomer oder Gummi sein.

Bei einer zweckmäßigen Ausführungsform weist der Stützring einen von zueinander orthogonalen Stützflächen begrenzten Fußteil, zwei beabstandete, vom Fußteil zueinander parallel senkrecht oder schräg vorstehende, in die Ringnuten des Dichtringes passende Ringrippen, und die als Ringnut ausgebildete Vertiefung zwischen den Ringrippen auf. Der Stützring kann aus Metall bestehen oder aus einem härteren Material als das Material des Dichtringes. Die Vertiefung kann als annähernd rechteckige Ringnut ausgebildet sein, oder als halbrund ausgekehlte Ringnut. Der Stützring ist einfach und kostengünstig herstellbar. Die Ringdichtung ist bequem montierbar.

Bei einer zweckmäßigen Ausführungsform können im Stützring die Ringrippen über Außenschultern gegenüber dem Fußteil einwärts versetzt sein. Auf diese Weise kann bei einem relativ breiten Fußteil, der für hohe Stabilität des Stützringes und dessen definierte Positionierung sorgt, trotzdem relativ viel Material in den Außenschenkeln des Dichtringes in der Ringnut untergebracht und statisch vorgespannt werden. Außerdem schaffen die Außenschultern die Möglichkeit, Freiräume zum quellungs- und/oder temperaturbedingten "Atmen" der Außenschenkel des Dichtringes zu schaffen.

Bei einer anderen zweckmäßigen Ausführungsform sind bei im Ventilteller montierter Ringdichtung zwischen den am Stützring anliegenden Teilen des Ventiltellers und dem Stützring und gegebenenfalls sogar auch in der Vertiefung freibleibende Ausweichräume für die Außenschenkel und/oder den Ringwulst vorgesehen, die ein relativ genau vorherbestimmbares und trotz Temperatur- und gegebenenfalls Quellungseinflüssen weitgehend gleichbleibendes Verformungsverhalten des vorgespannt montierten Dichtringes gewährleisten.

Um die Montage der Ringdichtung zu vereinfachen, kann bei einer zweckmäßigen Ausführungsform der Stützring aus Ringsegmenten teilbar ausgebildet sein. Beim Aufbringen des Dichtringes braucht dieser nicht unzweckmäßig gedehnt zu werden, sondern die Segmente werden in den Dichtring eingesetzt und dann innen im Dichtring gefügt. In montiertem Zustand, d.h. fixiert durch die anliegenden Teile des Ventiltellers, verhält sich der unterteilte Stützring dennoch wie ein einteiliger Stützring.

Aufgrund der einfachen Montage der zwei die Ringdichtung ergebenden Komponenten kann der Dichtring mit einer Shore-Härte von etwa 85 Shore ausgebildet werden, d.h. relativ hart, wodurch im montiertem Zustand ein Hinterwandern der Ringdichtung mit einem Reinigungsmedium und/oder einem Betriebsmedium und/oder ein Herausreißen aus der Ringnut weitestgehend vermieden werden.

Da die Ansprüche an das Dichtverhalten des Dichtrings in unterschiedlichen Bereichen seines Querschnittes verschieden sind, kann es zweckmäßig sein, den Dichtring in Spritzgieß-Zweikomponententechnik zwar einstückig aber mit Zonen unterschiedlicher Shore-Härten und damit Elastizitäten oder aus unterschiedlichen Materialien auszubilden. Diese Zwei- oder Mehrkomponententechnik ist wohlbekannt und ermöglicht es im vorliegenden Fall, den Dichtring ganz gezielt auf die in den jeweiligen Bereichen seines Querschnitts zu erwartenden Anforderungen individuell abzustimmen, z.B. auf statische und dynamische Dichtfunktionen.

Obwohl der Dichtring an den Stützring angehaftet sein könnte, wird einer Ausführungsform der Vorzug gegeben, bei der der Dichtring austauschbar angebracht ist. Denn der Dichtring ist ein Verschleißteil des Ventiltellers und muss gegebenenfalls getauscht werden, wobei der Stützring nach einem Austausch des Dichtrings verbleibt und wieder exakt die vorbestimmten Vorspannverhältnisse für den neuen Dichtring sicherstellt.

Anhand der Zeichnungen werden Ausführungsformen des Erfindungsgegenstandes erläutert. Es zeigen:
- Fig. 1: einen Längsschnitt einer Anordnung aus einem Sitzventil und einer Antriebsvorrichtung für zwei Ventilteller des Sitzventils,
- Fig. 2: einen Schnitt eines Sitzventils mit einem Ventilteller, in einer Schließstellung,
- Fig. 3: einen Schnitt eines Doppelsitzventils in der Schließstellung, und
- Fig. 4: eine Schnittdarstellung des Doppelsitzventils von Fig. 3 in einer Betriebsstellung z.B. kurz vor Aufgabe der Schließstellung.

Die Erfindung betrifft einen mehrteiligen Ventilteller T mit wenigstens einer Ringdichtung R sowie für sich auch diese Ringdichtung R. Ventilteller T mit wenigstens einer Ringdichtung R werden beispielsweise in Schieber- und/oder Sitzventilen mit nur einem oder zwei Ventiltellers (einfaches Schieber- oder Sitzventil) oder in Doppelsitzventilen mit zwei gemeinsam mit einem Sitz zusammenarbeitenden Ventiltellern T verwendet. Doppelsitzventile können mit einer Kombination aus einer Sitzventilfunktion und einer Schieberventilfunktion, oder einer Kombination zweier Sitzventilfunktionen oder zweier Schieberventilfunktionen arbeiten. Solche Doppelsitzventile werden beispielsweise zur Strömungssteuerung für Getränke, Lebensmittel, pharmazeutische oder biotechnische Produkte verwendet, müssen gegebenenfalls in spezieller Weise reinigbar sein, müssen in der Schließstellung Strömungswege zuverlässig voneinander isolieren und gegebenenfalls Leckagen zwischen den Strömungsmedien vermeiden, und müssen bei Reinigungstakten einen Medienaustausch zwischen den Strömungswegen ausschließen. Die erfindungsgemäßen Prinzipien sind jedoch auch auf anderen Anwendungsgebieten gleichermaßen einsetzbar, bei denen es auf eine eindeutig definierte, funktionssichere Dichtfunktion einer kostengünstig herstellbaren Ringdichtung in einem Ventilteller ankommt.

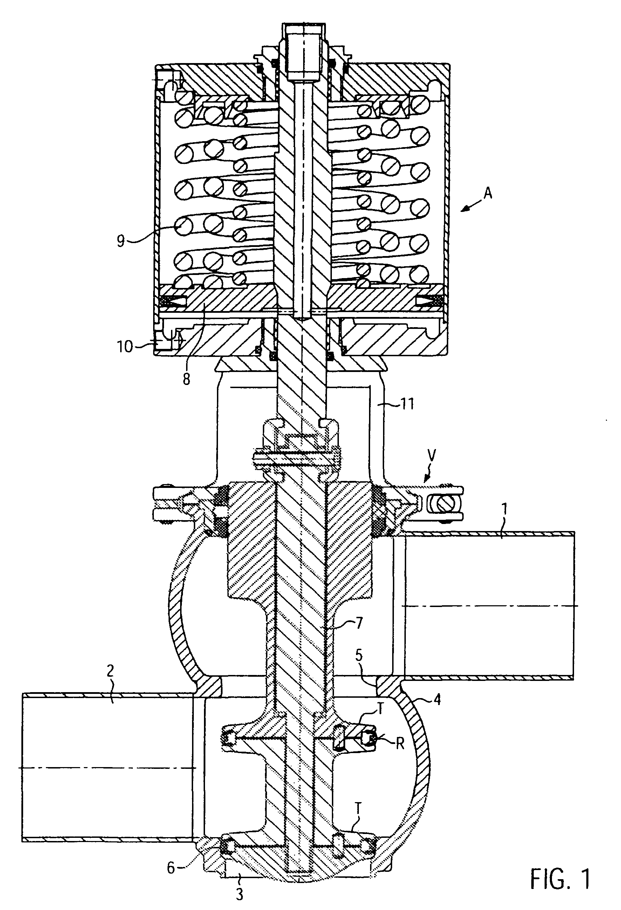

Fig. 1 zeigte einen Längsschnitt einer Anordnung aus einer Antriebsvorrichtung A und einem Sitzventil V in einer von hier zwei möglichen Schließstellungen. Im Sitzventil V sind in einem Ventilgehäuse 4 Strömungswege 1, 2 und 3 vorgesehen, zwischen denen jeweils ein hier zylindrischer Sitz 5, 6 vorgesehen ist, der jeweils mit einem von zwei gemeinsam linear bewegbaren Ventiltellern T zusammenarbeitet. Die beiden Ventilteller T haben gleiche Durchmesser und sind mit z.B. gleichen Ringdichtungen R ausgestattet, die in der gezeigten Ausführungsform eine rein radiale Abdichtwirkung (Schieberventilfunktion) im Sitz 5 oder 6 erbringen.

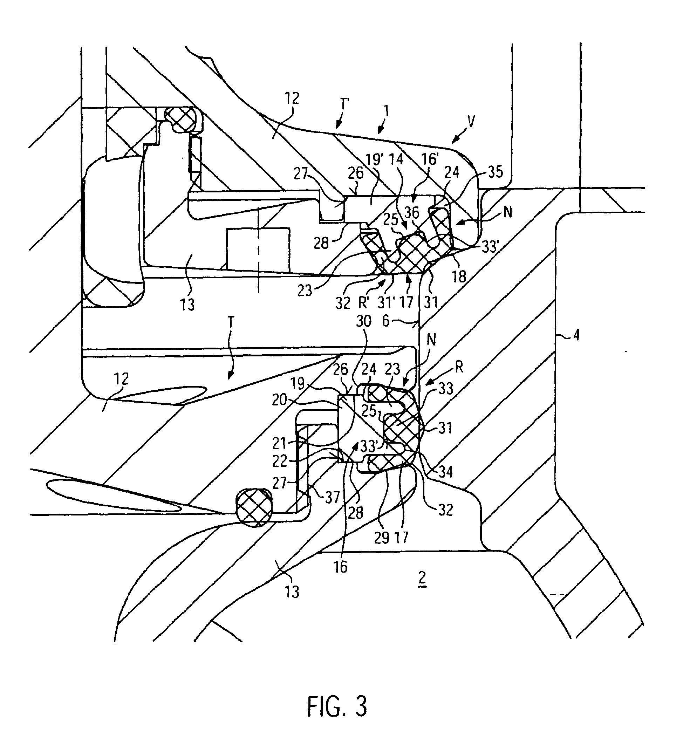

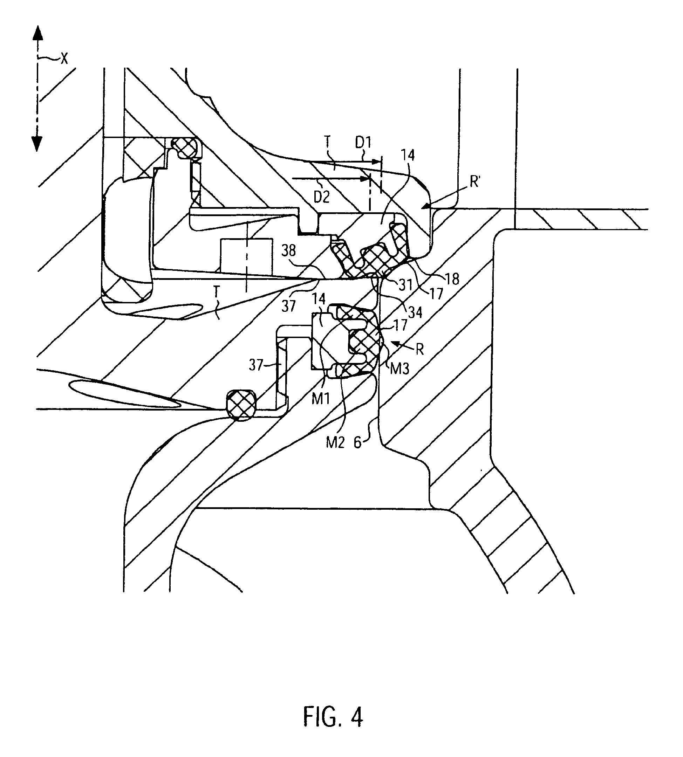

Alternativ (nicht gezeigt) könnte im Sitzventil V in Fig. 1 beispielsweise der untere Ventilteller T eine Sitzventilfunktion analog zum dort oberen Ventilteller T des Doppelsitzventils V in Fig. 3 erbringen. Beide Ventilteller T sind voneinander beabstandet mit einer gemeinsamen Kolbenstange 7 verschraubt, die mit einem Kolben 8 in der Antriebsvorrichtung A verbunden ist. Unter dem Kolben 8 ist eine Steuerkammer definiert, die aus einem Anschluss 10 mit einem Druckimpuls speisbar ist. An der Oberseite des Kolbens 8 wirkt eine Schließfederanordnung 9, die die in Fig. 1 gezeigte eine Schließstellung des unteren Ventiltellers T im Sitz 6 einstellt, während der andere Ventilteller T seinen Sitz 5 freigibt. Bei Druckbeaufschlagung des Kolbens 8 werden beide Ventilteller T in die andere Schließstellung gehoben (Verstellrichtung X in Fig. 4), in der der obere Ventilteller T den Sitz 5 verschließt, während der untere Ventilteller T eine Verbindung zwischen den Strömungswegen 2, 3 herstellt. Jeder Ventilteller T ist zumindest zweiteilig. Die Ringdichtungen R können untereinander gleich sein oder auch unterschiedliche Durchmesser aufweisen. Das Ventilgehäuse 4 ist mit der Antriebsvorrichtung A beispielsweise über ein Laternengehäuse 11 koaxial verbunden. Falls die beiden Ventilteller T unterschiedliche Durchmesser haben, können Stützringe 16 mit unterschiedlichen Durchmessern aber gleichen Querschnitten und, zumindest bei nicht gravierend verschiedenen Durchmessern, gleiche, d.h. form- und dimensionsgleiche Dichtringe 17 (ein Dichtring-Typ) verwendet werden.

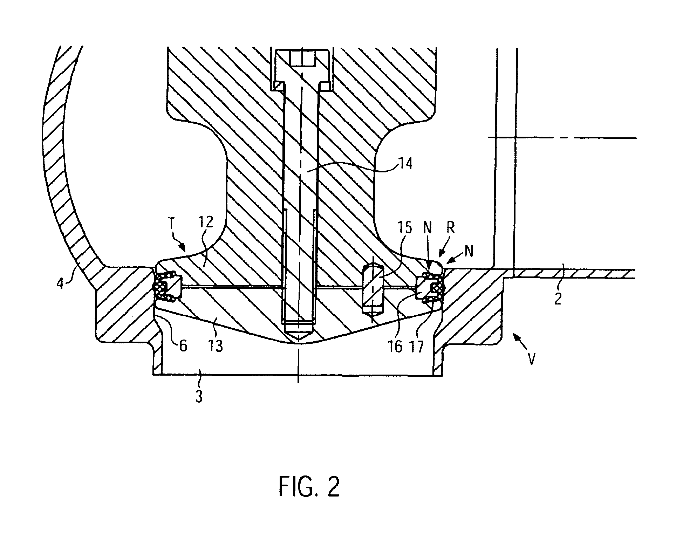

Fig. 2 zeigt einen Teil eines Sitzventils V, in dessen Ventilgehäuse 4 zwei Strömungswege 2, 3 über den zylindrisch ausgebildeten Sitz 6 miteinander kommunizieren. Mit dem Sitz 6 arbeitet hier ein Ventilteller T mit darin montierter Ringdichtung R mit radialer Dichtfunktion zusammen (Schieberventilfunktion). Der Ventilteller T besteht aus zwei Teilen 12, 13, die über eine Spannschraube 44 gegeneinander gespannt und durch einen Zentrierstift 15 relativ zueinander drehgesichert sind. Die beiden Teile 12, 13 sind in der gezeigten Ausführungsform nicht auf gegenseitigen Anschlag, sondern jeweils auf Anschlag gegen einen formstabilen Stützring 16 der Ringdichtung R gespannt, der in einer Ringnut N zwischen den Teilen 12, 13 des Ventiltellers T einen mit Vorspannung platzierten Dichtring 17 aus elastischem Material positioniert und stützt. Die Ringdichtung R aus dem Stützring 16 und dem Dichtring 17 ist eine vorfertigbare Ausstattungskomponente des Ventiltellers T. Der Dichtring 17 ist, zweckmäßig, austauschbar auf dem Stützring 16 angebracht, kann alternativ aber auch daran angehaftet sein, so dass bei einem Austausch nur der Dichtring 17 oder der Stützring 16 und der Dichtring 17 gewechselt werden.

Fig. 3 ist ein Teil eines Achsschnittes eines Doppelsitzventils V mit einem oberen und einem unteren Ventilteller T', T, jeweils bestehend aus zwei Teilen 12, 13, die über Schraubverbindungen 37 gegeneinander und jeweils gegen den Stützring 16, 16' der jeweiligen Ringdichtung R, R' gespannt sind. Der obere Ventilteller T' erbringt mit seiner Ringdichtung R' im Sitz 6 zwischen Strömungswegen 1, 2 im Gehäuse 4 eine Sitzventilfunktion mit axialer und radialer Abdichtung an einer konischen Dichtfläche 18, während der untere Ventilteller T mit seiner Ringdichtung R eine Schieberventilfunktion mit nur radialer Abdichtung zwischen den Strömungswegen 1, 2 im Sitz 6 erbringt. Der hier z.B. obere Ventilteller T' könnte sogar eine rein axial wirkende Ringdichtung aufweisen (nicht gezeigt).

Es könnte das Doppelsitzventil V auch zwei Ventilteller T im Sitz 6 jeweils mit einer Ringdichtung R analog zu dem unteren Ventilteller T in Fig. 3 aufweisen (zweifache Schieberventilfunktion), die beide auf dem gleichen Durchmesser oder auf unterschiedlichen Durchmessern abdichten (nicht gezeigt), oder zwei Ventilteller T' jeweils mit einer radialen und axialen Abdichtung analog zum oberen Ventilteller T' in Fig. 3, dann auf zwei im Durchmesser verschiedenen z.B. konischen Dichtflächen 18 im Sitz 6 (zweifache radiale und axiale Sitzventilfunktion), oder zwei Ventilteller T mit Ringdichtungen R geringfügig unterschiedlicher Durchmesser aber rein axialer Dichtwirkung mit konischen oder radialen Dichtflächen des Sitzes (zweifache axiale Sitzventilfunktion nicht gezeigt).

Anhand Fig. 3 soll das Konzept der Ringdichtung R, R' (auch für die Ausführungsformen der Ventile V in den Fig. 1, 2) detaillierter erläutert werden. Es ist dabei darauf hinzuweisen, dass die Ringdichtungen R, R' zwar unterschiedlich gestaltete Stützringe 16, 16' aufweisen, jedoch die damit verwendeten Dichtringe 17 form- und dimensionsgleich hergestellt sein können, d.h., in derselben Herstellungsform produziert und in relativ zueinander verdrehten Lagen und/oder Dehnungen auf den jeweiligen Stützring 16, 16' aufgebracht sind. Alternativ wäre es möglich, von vorneherein unterschiedlich dimensionierte und/oder gestaltete Dichtringe 17 zu verwenden, deren jeder nur zu einem Stützring 16 oder 16' passt.

Der im unteren Ventilteller T in den Fig. 3 und 4 verwendete Stützring 16 der Ringdichtung R besitzt einen verbreiterten Fußteil 19, der durch orthogonal aneinander anschließende Flächen 20, 21, 22 an drei Seiten begrenzt wird und so montiert ist, dass Anschlagflächen 26 und 28 der Teile 12, 13 des Ventiltellers T über die Schraubverbindung 37 zwischen den beiden Teilen 12, 13 von zwei einander gegenüberliegenden axialen Seiten gegen die Anschlagflächen 20, 22 des Fußteiles 19 gepresst werden. Somit definiert der Stützring 16 über die Breite seines Fußteiles 19 die Klemmweite der Ringnut N, die einen vorbestimmten Vorspannkraftschluss für den Dichtring 17 generiert. Vorzugsweise, stützt sich der Stützring 16 ferner mit der Fläche 21 des Fußteils 19 an einer radialen, zylindrischen Fläche 27 des Teiles 13 ab, so dass der Stützring 16 auch die Radialposition des Dichtringes 17 definiert, die einen festgelegten Überstand einer außenseitigen Außendichtzone 31 des Dichtringes 17 über den Ventilteller T (für die hier rein radiale Abdichtung) erzeugt.

Vom Fußteil 19 erstrecken sich an einem Stützteil 14 des Stützringes 16 über Außenschultern 24 senkrecht und einwärts versetzt zwei zumindest im Wesentlichen zueinander parallele Ringrippen 23 weg, die zwischen sich eine Vertiefung 25 in Form einer gerundeten oder annähernd rechteckigen Ringnut einschließen. Der vom Stützring 16 in der Ringnut N im unteren Ventilteller T positionierte Dichtring 17 hat annähernd C-förmigen Querschnitt, besteht aus elastischem Material wie einem Elastomer oder Gummi, und besitzt zwei annähernd zueinander parallele Außenschenkel 32, die zwischen Innenflanken 29 der Ringnut N mit dem vorbestimmten Vorspannkraftschluss auf den Ringrippen 23 des Stützringes 16 festgelegt sind. Innen angrenzend an die Außenschenkel 32 sind Ringnuten 34 in den Dichtring 17 eingeformt, die zwischen sich einen einwärts vortretenden Ringwulst 33' einschließen, der aus dem Material des Dichtringes 17 mit diesem einstückig ausgebildet ist und einen Rückstellbereich 33 definiert, der wirkungsmäßig zwischen der Vertiefung 25 und der Außendichtzone 31 eingeschaltet ist und dieser ein bestimmtes dynamisches Abdicht- bzw. Verformungsverhalten verleiht.

Der Stützring 16' im oberen Ventilteller T' in Fig. 3 unterscheidet sich von dem Stützring 16 im unteren Ventilteller T dadurch, dass der Fußteil 19' mit seinen drei orthogonal zueinander stehenden, aneinander anschließenden Begrenzungsflächen von Anschlagflächen 26, 28 axial und, gegebenenfalls, einer Anschlagfläche 27 der Teile 12, 13 radial fixiert ist, wobei sich der Fußteil 19' im Wesentlichen radial erstreckt. Die Ringrippen 23 streben unter einem schrägen Winkel vom Fußteil 19' weg. Jedoch hat der Stützteil 14 des Stützrings 16' den gleichen Querschnitt wie der Stützteil 14 des Stützrings 16. Die Ringnut N zwischen den beiden Teilen 12, 13 kann den gleichen Querschnitt haben, wie die im Ventilteller T, ist jedoch über den schräg vom Fußteil 19' wegstrebenden Stützteil 14 schräg gestellt, um über den Dichtring 17 eine radiale und axiale Abdichtung an der konischen Dichtfläche 18 zu erzeugen. Die Klemmweite der Ringnut N wird auch im oberen Ventilteller T' durch den Stützring 16' über die Abstützung der Teile 12, 13 definiert, d.h., es liegen auch hier ein definierter Vorspannkraftschluss des Dichtringes 17 sowie ein definierter Überstand der Außendichtzone 31 vor.

Bei der Ringdichtung R' (dies gilt auch für die Ringdichtung R) im oberen Ventilteller T' sind angrenzend an den Ringwulst 33' Freiräume 36 definiert, und/oder Freiräume 35 für die freien Enden der Außenschenkel 32 zwischen dem Fußteil 19' und den Teilen 12, 13 des Ventiltellers T. Diese Freiräume 36 und/oder 35 ermöglichen temperatur- und/oder quellungsbedingte Expansionen und Kontraktionen des Dichtrings 17.

In der in Fig. 3 gezeigten Ausführungsform besitzt ferner der untere Ventilteller T an seinem Teil 12 randseitig einen umlaufenden Dichtwulst 34, der zur Zusammenarbeit mit einer weiteren Außendichtzone 31' oder einem Teil der Außendichtzone 31 des Dichtringes 17 im oberen Ventilteller T' bestimmt ist, wenn das Doppelsitzventil V durch die in Fig. 3 nicht gezeigte Antriebsvorrichtung aus der in Fig. 3 gezeigten Schließstellung in die Offenstellung gebracht wird, wobei vor dem Abheben des oberen Ventiltellers T' zunächst der untere Ventilteller T so weit angehoben wird, dass der Dichtwulst 34 am Dichtring 17 im oberen Ventilteller T' dichtend angreift (Fig. 4), so dass beim Abheben des oberen Ventiltellers T von der konischen Dichtfläche 18 kein Medium aus einem Strömungsweg in den Zwischenraum zwischen den beiden Ventiltellern T, T' einströmen oder daraus ausströmen kann. Zusätzlich können an den Ventiltellern T, T' Anschlagflächen 37, 38 in bestimmten Relativlagen zum Dichtwulst 34 und der Außendichtzone 31 oder 31' vorgesehen sein, die in der Ventilstellung von Fig. 4 in Anlagekontakt kommen und eine präzise, exakt reproduzierbare, Dichtfunktion zwischen dem Dichtwulst 34 und der Außendichtzone 31 oder 31' definieren. Schließlich ist anzumerken, dass in den Fig. 3 und 4 der Teil 12 des oberen Ventiltellers T' (Sitzventilfunktion) am Außenrand in metallischem Kontakt mit der Dichtfläche 18 stehen kann, um eine definierte dynamische Dichtfunktion des Dichtrings 17 an der Dichtfläche 18 zu gewährleisten.

In der Mitnahmeposition in Fig. 4 wird schließlich der obere Ventilteller T' über den axialen Anlagekontakt der Anschlagflächen 37, 38 vom unteren Ventilteller T in die nicht gezeigte Öffnungsstellung mitgenommen, in der beide Ventilteller T, T' aus dem Sitz 6 ausgetreten sind.

In Fig. 4 ist als mögliche Variante angedeutet, dass der Dichtring 17, beispielsweise in Fig. 4 der untere, Zonen M1, M2, M3 unterschiedlicher Shore-Härten oder/oder Elastizitäten besitzt, und beispielsweise einstückig in Spritzgieß-Mehrkomponententechnik gefertigt wurde. Grundsätzlich kann eine Shore-Härte von etwa 85 Shore für den Dichtring 17 gewählt werden, weil die Montage der Ringdichtung R aus dem Stützring 16, 16' und dem Dichtring 17 einfach ist und keine übermäßigen Verformungen des Dichtringes 17 erfordert. Diese relativ hohe Shore-Härte des Dichtringes minimiert ferner bei montierter Ringdichtung R die Gefahr einer Hinterwanderung des Dichtringes in der Ringnut N und trägt zur Standfestigkeit, Ausreißfestigkeit und Verschleißfestigkeit des Dichtringes 17 bei.

Als weitere Alternative können form- und dimensionsgleiche Dichtringe 17, die in ein- und derselben Produktionsform hergestellt werden, wahlweise auf den Stützring 16' oder den Stürzring 16 aufgebracht werden. Im Hinblick darauf, dass der auf den Stützring 16' mit größerem Wirkdurchmesser D1 als D2 des Stützringes 16 aufgebrachte Dichtring 17 etwas mehr in Umfangsrichtung gedehnt und relativ zum Dichtring 17 auf dem Stützring 16 verdreht ist, kann der in derselben Form produzierte Dichtring 17 mit etwas geringerer Shore-Härte und damit höherer Elastizität ausgelegt sein. Zur Vereinfachung der Montage, und um unzweckmäßig starke Verformungen des Dichtringes 17 zu vermeiden, kann der jeweilige Stützring 16, 16' auch aus mindestens zwei Segmenten bestehen, die von innen in den Dichtring 17 einzeln eingesetzt und darin gefügt werden.

Wie erwähnt, könnte der gleiche Dichtring 17 auch für einen Stützring einer Ringdichtung verwendet werden, die nur eine rein axiale Abdichtung bei einer Sitzventilfunktion erbringt (ähnlich zu der oberen Ringdichtung R' in Fig. 3), wobei an dem dann verwendeten Stützring vom Fußteil die Ringrippen 23 wiederum senkrecht, jedoch parallel zur Verstellrichtung X (Fig. 4) des Ventiltellers hochstreben und die Vertiefung 25 in axialer Richtung orientiert ist (nicht gezeigt). Auch hier könnten, falls zwei Ventilteller T jeweils mit nur rein axialer Abdichtung (zweifache Sitzventilfunktion an entsprechenden Dichtflächen im Sitz) an den jeweilig voneinander sich hinsichtlich beispielsweise des Durchmessers unterscheidenden Stützringen derselbe Ringdichtungstyp 17 angebracht werden (Gleichteile-Philosophie), wobei der auf dem Stützring mit dem größeren Durchmesser montierte Dichtring etwas stärker gedehnt wäre, als der auf dem Stützring mit dem kleineren Durchmesser montierte Dichtring.

Der zumindest eine zwischen den Ringnuten 34 des Dichtringes 17 einwärts vorspringende Ringwulst 33' bildet, wie erwähnt, den Rückstellbereich 33 der Ringdichtung 17, der wirkungsmäßig und für eine dynamische Dichtfunktion der Außendichtzone 31 zwischen dem Grund der Vertiefung 25 und den Ringrippen 23 des Stützringes 16, 16' und der Außendichtzone 31 eingeschaltet ist. Dieser einstückig in die Ringdichtung 17 integrierte Rückstellbereich 33 definiert das z.B. dynamische Verformungs- und Dichtverhalten der Außendichtzone 31, die bei der gewählten Ausführungsform des Dichtringes 17 beispielsweise dachförmig gestaltet ist, jedoch auch eine andere Oberflächenstruktur haben könnte. Beim Verschieben des unteren Ventiltellers T in den Fig. 3 und 4 im Sitz 6 erzeugt der Rückstellbereich 33 vorwiegend die radiale Anpressung der Außendichtzone 31 an die Innenwand des Sitzes 6, wobei er sich am Grund der Vertiefung 25 und zwischen den Ringrippen 23 am Stützring 16 abstützt, während die Ringrippen 23 in den Ringnuten 34 Kräfte aufnehmen. Von solchen Verformungen werden die Außenschenkel 32 freigehalten, die die statische Abdichtfunktion im Inneren der Ringnut N leisten. Mittels des Stützringes 16 bzw. 16' und dessen Einspannung zwischen den Teilen 12, 13 des Ventiltellers T, gepaart mit der Integration des Rückstellbereiches 33 in die Ringdichtung 17, wird eine klar definierte Funktionstrennung der statischen und dynamischen Funktionen der Ringdichtung 17 beim Arbeiten des Doppelsitzventils V erzielt. Dies gilt auch für die obere Ringdichtung R' in den Fig. 3 und 4, in der der Stützring 16' für die Funktionstrennung der verschiedenen Dicht- und Arbeitsfunktionen der Ringdichtung 17 sorgt, wenn die Außendichtzone 31 mit der konischen Dichtfläche 18 zusammenarbeitet, oder mit dem Dichtwulst 34 des unteren Ventiltellers T. Die Kombination des Stützringes 16, 16' mit dem Dichtring 17 ermöglicht es schließlich vorteilhaft, den Querschnitt des Dichtringes 17 mit relativ wenig Material auszubilden, wodurch die Neigung des Dichtringes 17 zum Quellen bei Kontakt mit Medien und/oder zum Expandieren bei höheren Temperaturen erheblich begrenzt ist.

## Patentansprüche

1. Mehrteiliger Ventilteller (T, T') eines Schieber- und/oder Sitzventils (V), insbesondere eines Einfach- oder Doppelsitzventils zur Strömungssteuerung von Getränken, Lebensmitteln, pharmazeutischen oder biotechnischen Produkten, mit wenigstens einer in einer Ringnut (N) des Ventiltellers platzierten Ringdichtung (R, R'), die einen elastischen Dichtring (17) mit annähernd C-förmigem Querschnitt und wenigstens einer Außendichtzone (31) umfasst, der auf einen in den Dichtring (17) innenseitig formschlüssig eingreifenden, formstabilen Stützring (16, 16') aufgebracht ist, wobei im Stützring (16, 16') ein wirkungsmäßig zwischen einer Vertiefung (25) und der Außendichtzone (31) eingeschalteter elastischer Rückstellbereich (33) angeordnet ist, **dadurch gekennzeichnet, dass** der Rückstellbereich (33) angrenzend an die Außendichtzone (31) des Dichtringes (17) aus dessen Material einstückig mit dem Dichtring (17) ausgebildet ist.

2. Mehrteiliger Ventilteller nach Anspruch 1, **dadurch gekennzeichnet, dass** Teile (12, 13) des Ventilteller (T, T') form- und kraftschlüssig in von der Verstellrichtung (X) des Ventiltellers (T, T') definierten Axialrichtungen von zwei Seiten am Stützring (16, 16') abgestützt sind, und dass der Stützring (16, 16') über die Abstützung der Teile (12, 13) die einen Vorspannkraftschluss für den Dichtring (17) generierende Klemmweite der Ringnut (N) definiert.

3. Mehrteiliger Ventilteller nach Anspruch 1 oder 2, **dadurch gekennzeichnet, dass** der Stützring (16, 16') über eine radiale Abstützung, die einen Überstand der Außendichtzone (31) über den Ventilteller (T, T') generierende Radialposition des Dichtringes (17) definiert, vorzugsweise zusätzlich über eine radiale formschlüssige Abstützung an wenigstens einem Teil (12, 13) des Ventiltellers (T, T').

4. Mehrteiliger Ventilteller nach Anspruch 1, **dadurch gekennzeichnet, dass** der Stützring (16, 16') mit radial nach außen weisender oder axial orientierter oder mit axialen und radialen Richtungskomponenten schräg nach außen orientierter Vertiefung (25) ausgebildet ist, und dass derselbe Typ des Dichtringes (17) von form- und dimensionsgleich hergestellten Dichtringen korrespondierend mit der jeweiligen Orientierung der Vertiefung (25) des Stützringes (16, 16') auf dem Stützring (16, 16') angebracht ist.

5. Mehrteiliger Ventilteller nach Anspruch 4, **dadurch gekennzeichnet, dass** Dichtringe (17) eines form- und dimensionsgleich hergestellten Dichtringtyps abhängig von der Orientierung der Vertiefung (25) im Stützring (16, 16') unterschiedliche Shore-Härten aufweisen.

6. Mehrteiliger Ventilteller nach wenigstens einem der vorhergehenden Ansprüche, **dadurch gekennzeichnet, dass** der Dichtring (17) im Querschnitt zwei, vorzugsweise zu ihren freien Enden in der Stärke zunehmende, Außenschenkel (32), zwischen den Außenschenkeln (32) au-βenseitig die, vorzugsweise dachförmig gestaltete Außendichtzone (31), innenseitig angrenzend an die Außenschenkel (32) je eine Ringnut (34), und zwischen den Ringnuten (34) wenigstens einen einwärts vortretenden Ringwulst (33') aufweist.

7. Mehrteiliger Ventilteller nach wenigstens einem der vorhergehenden Ansprüche, **dadurch gekennzeichnet, dass** der, vorzugsweise aus Metall oder einem härterem Material als das des Dichtringes (17) ausgebildete Stützring (16, 16') einen von zueinander orthogonalen Stützflächen (20, 21, 22) begrenzten Fußteil (19, 19'), zwei beabstandete, vom Fußteil (19, 19') zueinander parallel senkrecht oder schräg vorstehende, in die Ringnuten (34) des Dichtringes (17) passende Ringrippen (23), und zwischen den Ringrippen (23) die als Ringnut ausgebildete Vertiefung (25) aufweist.

8. Mehrteiliger Ventilteller nach Anspruch 7, **dadurch gekennzeichnet, dass** im Stützring (16, 16') die Ringrippen (23) über Außenschultern (24) gegenüber dem Fußteil (19, 19') einwärts versetzt sind.

9. Mehrteiliger Ventilteller nach wenigstens einem der vorhergehenden Ansprüche, **dadurch gekennzeichnet, dass** bei im Ventilteller (T, T') montierter Ringdichtung (R, R') zwischen den am Stützring (16, 16') anliegenden Teilen (12, 13) des Ventiltellers (T, T') und dem Stützring (16, 16'), und in der Vertiefung (25) des Stützringes (16, 16') freigehaltene Ausweichräume (35, 36) für die Außenschenkel (32) und den Ringwulst (33') vorgesehen sind.

10. Mehrteiliger Ventilteller nach wenigstens einem der vorhergehenden Ansprüche, **dadurch gekennzeichnet, dass** der Stützring (16, 16') aus Ringsegmenten teilbar ausgebildet ist.

11. Mehrteiliger Ventilteller nach wenigstens einem der vorhergehenden Ansprüche, **dadurch gekennzeichnet, dass** der Dichtring (17) eine Shore-Härte von etwa 85 Shore aufweist.

12. Mehrteiliger Ventilteller nach wenigstens einem der vorhergehenden Ansprüche, **dadurch gekennzeichnet, dass** der Dichtring (17) in Spritzgieß-Zweikomponententechnik einstückig mit Zonen (M1, M2, M3) unterschiedlicher Shore-Härten ausgebildet ist.

13. Mehrteiliger Ventilteller nach wenigstens einem der vorhergehenden Ansprüche, **dadurch gekennzeichnet, dass** der Dichtring (17) austauschbar auf den Stützring (16, 16') aufgebracht ist.

14. Ringdichtung (R, R') für einen mehrteiligen Ventilteller (T, T') eines Schieber- und/oder Sitzventils (V), wobei die Ringdichtung (R, R') einen elastischen Dichtring (17) mit annähernd C-förmigem Querschnitt und wenigstens einer Außendichtzone (31) umfasst und auf einen innenseitig formschlüssig in den Dichtring (17) eingreifenden, formstabilen Stützring (16, 16') aufgebracht ist, und wobei wirkungsmäßig zwischen dem Stützring (16, 16') und der Außendichtzone (31) im Stützring (16, 16') ein elastischer Rückstellbereich (33) angeordnet ist, **dadurch gekennzeichnet, dass** der Rückstellbereich (33) angrenzend an die Außendichtzone (31) des Dichtringes (17) aus dessen Material einstückig mit dem Dichtring (17) ausgebildet ist.

## Claims

1. Multi-part valve disk (T, T) of a sliding and/or seat valve (V), in particular of a single or double seat valve for the flow control of beverages, food, pharmaceutical or biotechnical products, with at least one ring seal (R, R') placed in a ring groove (N) of the valve disk, which comprises an elastic sealing ring (17) with an approximately C-shaped cross-section and at least one external sealing zone (31), which is placed onto a dimensionally stable backup ring (16, 16') engaging at the inner surface in the sealing ring (17) with a positive fit, wherein an elastic restoring region (33) effectively inserted between an indentation (25) and the external sealing zone (31) is arranged in the backup ring (16, 16'), **characterized in that** the restoring region (33) is embodied adjacent to the external sealing zone (31) of the sealing ring (17) from the material of and in one piece with the sealing ring (17).

2. Multi-part valve disk according to claim 1, **characterized in that** parts (12, 13) of the valve disk (T, T') are positively and non-positively supported at the backup ring (16, 16') from two sides in axial directions defined by the direction of adjustment (X) of the valve disk (T, T'), and that the backup ring (16, 16') defines the clamping width of the ring groove (N) generating a preload frictional connection for the sealing ring (17) via the support of the parts (12, 13).

3. Multi-part valve disk according to claim 1 or 2, **characterized in that** the backup ring (16, 16') defines the radial position of the sealing ring (17) generating a protrusion of the external sealing zone (31) over the valve disk (T, T') via a radial support, preferably additionally via a radial positive support at at least one part (12, 13) of the valve disk (T, T').

4. Multi-part valve disk according to claim 1, **characterized in that** the backup ring (16, 16') is embodied with an indentation (25) facing radially outwards or being oriented axially, or with an indentation (25) oriented obliquely outwards with axial and radial direction components, and that the same type of the sealing ring (17) among sealing rings produced with the same shapes and the same dimensions is attached on the respective backup ring (16, 16') corresponding to the respective orientation of the indentation (25) of the backup ring (16, 16').

5. Multi-part valve disk according to claim 4, **characterized in that**, depending on the orientation of the indentation (25) in the respective backup ring (16, 16'), sealing rings (17) of one sealing ring type produced with the same shapes and dimensions have different Shore hardnesses.

6. Multi-part valve disk according to at least one of the preceding claims, **characterized in that** the sealing ring (17) comprises in a cross-section two outer legs (32) which preferably become thicker towards their free ends, between the outer sides (32) at the external surface the preferably roof-shaped external sealing zone (31), internally adjacent to the outer legs (32) one ring groove (34) each, and between the ring grooves (34) at least one annular ring bead (33') projecting inwards.

7. Multi-part valve disk according to at least one of the preceding claims, **characterized in that** the backup ring (16, 16'), preferably made of metal or of a harder material than that of the sealing ring (17), comprises a base part (19, 19') limited by backup faces (20, 21, 22) being orthogonal to each other, two spaced ring ribs (23) projecting from the base part (19, 19') in parallel and perpendicularly or obliquely and fitting into the ring grooves (34) of the sealing ring (17), and between the ring ribs (23) the indentation (25) embodied as a ring groove.

8. Multi-part valve disk according to claim 7, **characterized in that** in the backup ring (16, 16'), the ring ribs (23) are offset inwards via external shoulders (24) with respect to the base part (19, 19').

9. Multi-part valve disk according to at least one of the preceding claims, **characterized in that**, with the ring seal (R, R') being mounted in the valve disk (T, T), open dislocation spaces (35, 36) for the outer legs (32) and the annular ring bead (33') are provided between the parts (12, 13) of the valve disk (T, T') lying against the backup ring (16, 16') and the backup ring (16, 16'), and in the indentation (25) of the backup ring (16, 16').

10. Multi-part valve disk according to at least one of the preceding claims, **characterized in that** the backup ring (16, 16') is embodied divisibly from ring segments.

11. Multi-part valve disk according to at least one of the preceding claims, **characterized in that** the sealing ring (17) has a Shore hardness of about 85 Shore.

12. Multi-part valve disk according to at least one of the preceding claims, **characterized in that** the sealing ring (17) is embodied with bi-injection molding technology in one piece with zones (M1, M2, M3) of different Shore hardnesses.

13. Multi-part valve disk according to at least one of the preceding claims, **characterized in that** the sealing ring (17) is replaceably mounted on the backup ring (16, 16').

14. Ring seal (R, R') for a multi-part valve disk (T, T) of a sliding and/or seat valve (V), wherein the ring seal (R, R') comprises an elastic sealing ring (17) with an approximately C-shaped cross-section and at least one external sealing zone (31) and is mounted onto a dimensionally stable backup ring (16, 16') positively engaged internally in the sealing ring (17), and wherein between the backup ring (16, 16') and the external sealing zone (31) in the backup ring (16, 16'), an elastic restoring region (33) is effectively arranged, **characterized in that** the restoring region (33) is embodied adjacent to the external sealing zone (31) of the sealing ring (17) in one piece of the material of the sealing ring (17).

## Revendications

1. Tête de soupape en plusieurs parties (T, T') d'une soupape à tiroir et/ou à siège (V), en particulier d'une soupape à simple ou double siège, pour commander l'écoulement de boissons, d'aliments, de produits pharmaceutiques ou biotechniques, pourvue d'au moins un joint d'étanchéité annulaire (R, R') qui est placé dans une rainure annulaire (N) de la tête de soupape et qui comprend une bague d'étanchéité élastique (17), pourvue d'une section transversale approximativement en forme de C et d'au moins une zone d'étanchéité extérieure (31), qui est appliquée sur une bague d'appui (16, 16') indéformable qui pénètre par complémentarité de forme, côté intérieur, dans la bague d'étanchéité (17), étant précisé qu'il est prévu dans la bague de support (16, 16') une zone de rappel élastique (33) qui est placée de manière fonctionnelle entre un creux (25) et la zone d'étanchéité extérieure (31), **caractérisée en ce que** la zone de rappel (33) est venue de matière avec la bague d'étanchéité (17) près de la zone d'étanchéité extérieure (31) de ladite bague d'étanchéité (17).

2. Tête de soupape en plusieurs parties selon la revendication 1, **caractérisée en ce que** les parties (12, 13) de la tête de soupape (T, T') sont supportées par complémentarité de forme et par adhérence contre la bague de support (16, 16'), dans les directions axiales définies par le sens de déplacement (X) de la tête de soupape (T, T'), par deux côtés, et **en ce que** la bague de support (16, 16') définit par l'intermédiaire du support des parties (12, 13) la largeur de blocage de la rainure annulaire (N) qui génère l'adhérence de précontrainte pour la bague d'étanchéité (17).

3. Tête de soupape en plusieurs parties selon la revendication 1 ou 2, **caractérisée en ce que** la bague de support (16, 16') définit par l'intermédiaire d'un support radial la position radiale de la bague d'étanchéité (17) qui génère une saillie de la zone d'étanchéité extérieure (31) par rapport à la tête de soupape (T, T'), de préférence en supplément par l'intermédiaire d'un support radial par complémentarité de forme contre au moins une partie (12, 13) de la tête de soupape (T, T').

4. Tête de soupape en plusieurs parties selon la revendication 1, **caractérisée en ce que** la bague de support (16, 16') est pourvue d'un creux (25) dirigé radialement vers l'extérieur ou orienté axialement ou orienté avec des composantes de direction axiales et radiales en biais vers l'extérieur, et **en ce qu'**un même type de bagues d'étanchéité (17) fabriquées avec la même forme et les mêmes dimensions est monté sur la bague de support (16, 16') avec l'orientation correspondante du creux (25) de la bague de support (16, 16').

5. Tête de soupape en plusieurs parties selon la revendication 4, **caractérisée en ce que** des bagues d'étanchéité (17) d'un type de bague d'étanchéité fabriqué avec la même forme et les mêmes dimensions présentent des duretés Shore différentes en fonction de l'orientation du creux (25) dans la bague de support (16, 16').

6. Tête de soupape en plusieurs parties selon l'une au moins des revendications précédentes, **caractérisée en ce que** la bague d'étanchéité (17) présente en coupe transversale : deux branches extérieures (32) dont l'épaisseur va de préférence en augmentant vers leur extrémité libre ; entre les branches extérieures (32), côté extérieur, la zone d'étanchéité extérieure (31) de préférence en forme de toit ; côté intérieur, près de chacune des branches extérieures (32), une rainure annulaire (34) ; et entre les rainures annulaires (34) au moins un renflement (33') qui fait saillie vers l'intérieur.

7. Tête de soupape en plusieurs parties selon l'une au moins des revendications précédentes, **caractérisée en ce que** la bague de support (16, 16'), composée de préférence de métal ou d'un matériau plus dur que celui de la bague d'étanchéité (17), comporte une partie de base (19, 19') qui est délimitée par des surfaces de support (20, 21, 22) orthogonales les unes par rapport aux autres, deux nervures annulaires (23) espacées qui dépassent de la partie de base (19, 19'), perpendiculairement ou en biais, parallèlement l'une à l'autre, et qui pénètrent de manière ajustée dans les rainures annulaires (34) de la bague d'étanchéité (17), et entre les nervures annulaires (23) le creux (25) conçu comme une rainure annulaire.

8. Tête de soupape en plusieurs parties selon la revendication 7, **caractérisée en ce que** dans la bague de support (16, 16'), les nervures annulaires (23) sont décalées vers l'intérieur par rapport à la partie de base (19, 19') par l'intermédiaire d'épaulements extérieurs (24).

9. Tête de soupape en plusieurs parties selon l'une au moins des revendications précédentes, **caractérisée en ce que** lorsque le joint d'étanchéité annulaire (R, R') est monté dans la tête de soupape (T, T'), il est prévu entre les parties (12, 13) de la tête de soupape (T, T') appliquées contre la bague de support (16, 16') et cette dernière, et dans le creux (25) de la bague de support (16, 16_{'}), des espaces de dégagement (35, 36) pour les branches extérieures (32) et le renflement annulaire (33').

10. Tête de soupape en plusieurs parties selon l'une au moins des revendications précédentes, **caractérisée en ce que** la bague de support (16, 16') est formée à partir de segments annulaires de manière à pouvoir être divisée.

11. Tête de soupape en plusieurs parties selon l'une au moins des revendications précédentes, **caractérisée en ce que** la bague d'étanchéité (17) présente une dureté Shore d'environ 85 Shore.

12. Tête de soupape en plusieurs parties selon l'une au moins des revendications précédentes, **caractérisée en ce que** la bague d'étanchéité (17) est formée d'une seule pièce, avec la technique de moulage par injection à deux composants, avec des zones (M1, M2, M3) de duretés Shore différentes.

13. Tête de soupape en plusieurs parties selon l'une au moins des revendications précédentes, **caractérisée en ce que** la bague d'étanchéité (17) est posée sur la bague de support (16, 16') de manière à pouvoir être remplacée.

14. Joint d'étanchéité annulaire (R, R') pour une tête de soupape en plusieurs parties (T, T') d'une soupape à tiroir et/ou à siège (V), étant précisé que le joint d'étanchéité annulaire (R, R') comprend une bague d'étanchéité élastique (17), pourvue d'une section transversale approximativement en forme de C et d'au moins une zone d'étanchéité extérieure (31), et est appliquée sur une bague d'appui (16, 16') indéformable qui pénètre par complémentarité de forme, côté intérieur, dans la bague d'étanchéité (17), et étant précisé qu'une zone de rappel élastique (33) placée de manière fonctionnelle entre la bague de support (16, 16') et la zone d'étanchéité extérieure (31), dans la bague de support (16, 16'), **caractérisé en ce que** la zone de rappel (33) est venue de matière avec la bague d'étanchéité (17), près de la zone d'étanchéité extérieure (31) de ladite bague d'étanchéité (17).
